# EUROPEAN PATENT APPLICATION

(11) **EP 1 258 745 A2**
(43) Date of publication of application: **20.11.2002**
(21) Application number: 02252656.0
(22) Date of filing: 15.04.2002
(51) Int. Cl.: G02B 5/28

(54) **Optical filter**

(30) Priority: 09.05.2001 JP 2001138388
(71) Applicant: ALPS ELECTRIC CO., LTD., Ota-ku Tokyo (JP)
(72) Inventor: Someno, Yoshihiro, c/o Alps Electric Co., Ltd., Ota-ku, Tokyo (JP)
(74) Representative: Kensett, John Hinton

(57) **Abstract**

By stacking films (2, 3) whose refractive index differs, there is formed an optical filter which reflects light in a predetermined wavelength band for separation. The films whose refractive index differs are stacked by varying the film thickness. As a result, there is formed a filter comprising a low refractive index region having a physical thickness of d_{L} and an equivalent refractive index of n_{L}* and a high refractive index region having the physical thickness of d_{H} and the equivalent refractive index of n_{H}* alternately stacked. The equivalent optical film thicknesses are set to 1/(4·λ₀) or 1/(2λ₀), whereby it is possible to reflect light having a narrow band of wavelengths with a wavelength λ₀ being centered for separation.

## Description

### BACKGROUND OF THE INVENTION

### 1. Detailed Description of the Invention

The present invention relates to an optical filter comprising plural layers of optical films formed of optical materials stacked, and more particularly to an optical filter which does not transmit but reflects light in a predetermined band.

### 2. Description of the Prior Art

As an optical element, there is a reflection type element which reflects light in a predetermined band width in units of several tens nm with a reference wavelength being centered and transmits light having any other wavelengths then the above-described band. When such a reflection type optical element is used, even if the light in the wavelength band is any polarized light, it is possible to separate this light from light in another wavelength band.

As an optical element of the above-described reflection type, there has conventionally existed fiber grating. In this fiber grating, on the surface of a clad portion of the optical fiber or the clad portion and a core portion, there is formed a flaw-shaped groove extending circumferentially at regular intervals in the axial direction. A plurality of the grooves are formed at intervals which satisfy 1/(4•n•λ₀) (where n is a refractive index of the core portion) relative of the center wavelength λ₀ of the band of light to be reflected (separated).

Of light incident to the fiber grating, light in a band having a predetermined width including the center wavelength λ₀ resonates at the grooves in the axial direction, and this resonance is repeated, whereby the light is reflected in the direction of incidence to be returned, and the light having any other wavelengths than the band is adapted to travel within the fiber grating.

The fiber grating, however, is difficult to manufacture, and is expensive because on the surface of the optical fiber, there must be formed grooves with uniform depth at as exceedingly fine intervals as 1/(4• n•λ₀).

Also, in the fiber grating, so-called ripple in which the transmission factor also attenuates on light having any other wavelengths than the band to be reflected is prone to be produced. Also, there also remains a problem that in not only light in a band including the center wavelength λ₀, but also light having wavelengths of higher order equal to the integer multiple of the center wavelength λ₀, reflection occurs.

### SUMMARY OF THE INVENTION

The present invention has been achieved in order to achieve the above-described conventional problems, and is aimed to provide an optical filter capable of reflecting and separating light in a predetermined wavelength band through the use of thin film structure, improving its characteristic properties and having also a degree of freedom in designing.

According to a first aspect of the present invention, there is provided an optical filter comprising low refractive index films formed of optical materials and high refractive index films likewise formed of the optical materials alternately stacked, wherein

each of the low refractive index films has a refractive index of n_{L} and a physical film thickness of d_{L} and each of the high refractive index films has a refractive index of n_{H} (n_{L} < n_{H}) and a physical film thickness of d_{H}),

an optical film thickness of the low refractive index film is n_{L}•d_{L} = 1/(2·m·λ₀), and an optical film thickness of the high refractive index film is n_{H}·d_{H} = 1/(2• m•λ₀) (where m is an arbitrary constant), and
of incident light, light in a band of a predetermined range including a wavelength λ₀ does not transmit, but is reflected.

According to a second aspect of the present invention, there is provided an optical filter comprising low refractive index films formed of optical materials and high refractive index films likewise formed of the optical materials alternately stacked, wherein

a physical film thickness d_{L} of each of the low refractive index films is constant, a physical film thickness d_{H} of each of the high refractive index films is constant, and the low refractive index film and a high refractive index film are formed such that the refractive index is gradually changed toward a direction of the film lamination,

one or more layers of low refractive index film having the lowest refractive index have a refractive index of n_{L} and an optical film thickness of n_{L}•d_{L} = 1/(2•m•λ₀), and one or more layers of high refractive index film having the highest refractive index have a refractive index of n_{H} (n_{L} < n_{H}) and an optical film thickness of n_{H}•d_{H} = 1/(2• m•λ₀) (where "m" is an arbitrary constant), and of the incident light, light in a band of a predetermined range including a wavelength (0 does not transmit but is reflected.

According to a third aspect of the present invention, there is provided an optical filter comprising low refractive index regions having a physical thickness of d_{L} and a high refractive index region having a physical thickness of d_{H} alternately stacked, wherein
the low refractive index region and the high refractive index region are formed of a layered product (nx and dx are both variables) of films having a refractive index of nx and a physical film thickness of dx, and an optical film thickness of the low refractive index region is equivalently n_{L}*•d_{L} = Σ(nx·dx) while an optical film thickness of the high refractive index region is equivalently n_{H}*•d_{H} = Σ(nx·dx) (n_{L}* and n_{H}* are equivalent refractive indices and n_{L}* < n_{H}*),
the optical film thickness of the low refractive index region is n_{L}*•d_{L} = 1/(2•m•λ₀), and the optical film thickness of the high refractive index region is n_{H}*•d_{H} = 1/(2•m•λ₀) (where, m is an arbitrary constant),
of the incident light, light in a band of a predetermined range including a wavelength λ₀ does not transmit, but is reflected.

According to a fourth aspect of the present invention, there is provided an optical filter comprising a low refractive index region having a physical thickness of d_{L} and a high refractive index region having a physical thickness of d_{H} alternately stacked, wherein
the low refractive index region and the high refractive index region are formed of a layered product (nx and dx are both variables) of films having a refractive index of nx and a physical film thickness of dx, and an optical film thickness of the low refractive index region is equivalently n_{L}*•d_{L} = Σ(nx•dx) while an optical film thickness of the high refractive index region is equivalently n_{H}*•d_{H} = Σ(nx•dx) (n_{L}* and n_{H}* are equivalent refractive indices and n_{L}* < n_{H}*),
the physical thickness d_{L} of each of the low refractive index regions is constant, the physical thickness d_{H} of each of the high refractive index regions is constant, and the low refractive index region and the high refractive index region are formed such that the equivalent refractive index n_{L}* or n_{H}* gradually varies toward a direction of the film lamination,
the low refractive index region at one or more places having the lowest equivalent refractive index is equivalently n_{L}*•d_{L} = 1/(2•m•λ₀) in optical film thickness, and one or more high refractive index regions having the highest equivalent refractive index are equivalently n_{H}*• d_{H} = 1/(2•m•λ₀) (where mis an arbitrary constant) in optical film thickness, and
of the incident light, light in a band of a predetermine range including a wavelength λ₀ does not transmit but is reflected.

For example, the low refractive index region and the high refractive index region have optical films having the same refractive index, and the physical film thickness of the optical film varies for each region, or the low refractive index region and the high refractive index region have an optical film respectively, whose physical film thickness is constant in each region, and whose refractive index gradually varies for each region.

Also, inside the low refractive index region and inside the high refractive index region, the refractive index preferably varies at least in two stages.

Also, combination of materials and/or a compounding ratio thereof are changed, whereby it is possible to make the refractive index of each optical film different from one another.

An embodiment of the present invention will now be described, by way of example only, with reference to the accompanying drawings, in which:
FIG. 1A is a cross-sectional view showing an optical filter according to a basic embodiment of the present invention, and FIG. 1B is a chart showing relationship between a physical film thickness and a refractive index of the optical filter;
FIG. 2 is a chart showing relationship between the physical thickness and the refractive index indicating a further preferable configuration;
FIG. 3 is a characteristic chart of the optical filter shown in FIG. 1;
FIG. 4 is an explanatory view illustrating evaluation reference of Table 1;
FIGS.5Aand5Barechartsshowingrelationshipbetween the physical film thickness and the refractive index of an optical filter according to another embodiment of the present invention, and FIG. 5C is a chart showing relationship between the equivalent refractive index and the physical film thickness;
FIGS. 6A to 6C are charts showing relationship between the physical film thickness and the refractive index of an optical filter according to further preferable another embodiment of the present invention, and FIG. 6D is a chart showing relationship between the equivalent refractive index and the physical film thickness;
FIG. 7A is a chart showing relationship between the physical film thickness and the refractive index of an optical filter according to further preferable another embodiment of the present invention, and FIG. 7B is a chart showing variations in the equivalent refractive index;
FIG. 8 is a chart showing characteristic of the optical filter according to a preferable embodiment of the present invention;
FIG. 9 is a chart showing characteristic of the optical filter according to a further preferable embodiment of the present invention;
FIG. 10 is a chart showing the characteristic when a band-pass filter is constituted of an optical filter according to an embodiment of the present invention; and
FIG. 11 is a chart showing a logarithmic characteristic when a band-pass filter is constituted of an optical filter according to an embodiment of the present invention.

### DETAILED DESCRIPTION OF THE PREFERRED EMBODIMENTS

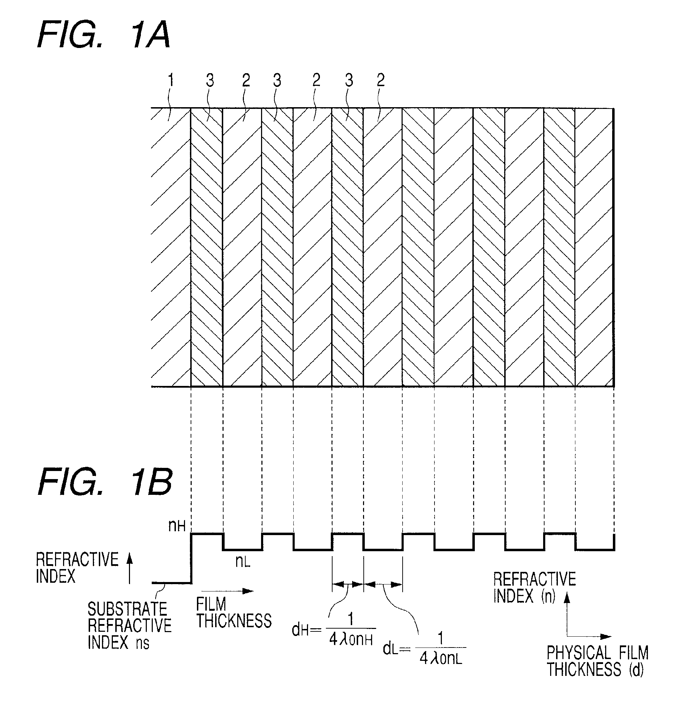

FIG. 1A is a cross-sectional view showing basic structure of an optical filter according to an embodiment of the present invention, and FIG. 1B is a chart showing relationship between the refractive index of each optical film and the physical film thickness of the optical filter.

The optical filter shown in FIG. 1A has low refractive index films 2 and high refractive index films 3 alternately stacked on the surface of a transparent substrate 1 having a substrate refractive index ns. The both films are formed by a technique such as the sputtering method, the vapor deposition method and the CVD method.

The physical film thickness of the low refractive index film 2 is all d_{L} and the physical film thickness of the high refractive index film 3 is all d_{H} (where d_{L} ≠ d_{H}). In the case where the refractive index of the optical materials forming the low refractive index film 2 is assumed to be n_{L}, when the center wavelength of light in a band which will be reflected is assumed to be λ₀, the physical film thickness of the low refractive index film 2 is d_{L} = 1/(2•m•λ₀•n_{L}). Also, when the refractive index of the optical materials forming the high refractive index film 3 is assumed to be n_{H}, its physical film thickness is d_{H} = 1/(2•m•λ₀•n_{H}). However, the above-described "m" in both films is an arbitrary constant.

Therefore, the optical film thickness of the low refractive index film 2 is n_{L}•d_{L} = 1/(2•m•λ₀), and the optical film thickness of the high refractive index film 3 is n_{H}•d_{H} =1/(2•m•λ₀).

In the example of FIG. 1, the above-described "m" is an integer of 1 or more, and m = 2, and the physical film thickness of the low refractive index film 2 is d_{L} = 1/(4•λ₀•n_{L}) while the physical film thickness of the high refractive index film 3 is d_{H} = 1/(4•λ₀•n_{H}). Also, if m = 1, the physical film thickness of the low refractive index film 2 is d_{L} = 1/(2•λ₀•n_{L}) while the physical film thickness of the high refractive index film 3 is d_{H} = 1/(2• λ₀•n_{H}).

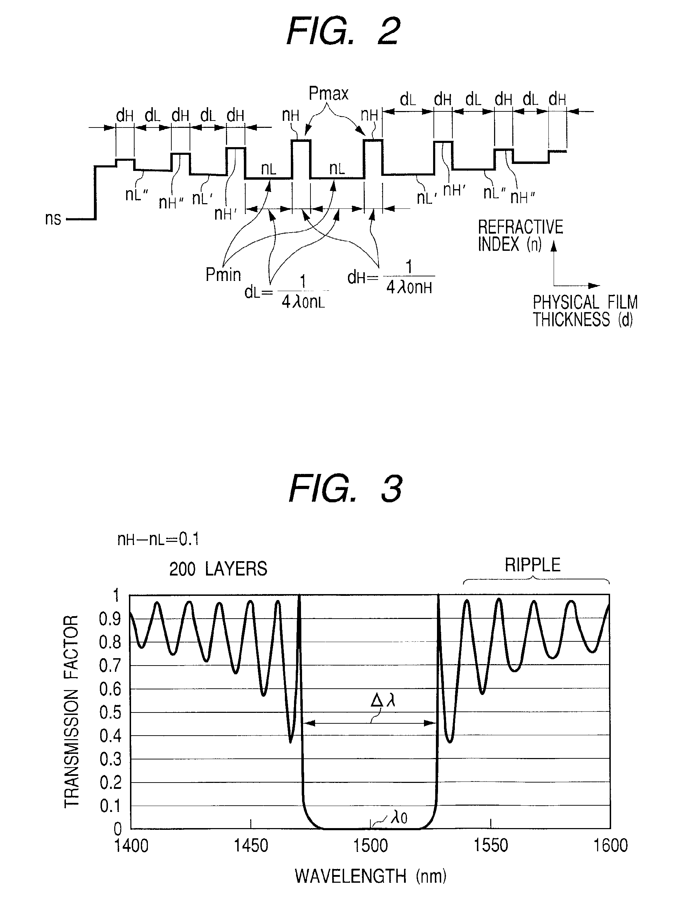

In the optical filter shown in FIGS. 1A and 1B, as shown in FIG. 3, when light is incident, light in a predetermined wavelength band with the center wavelength λ₀ being centered does not transmit but is reflected, and light of any other wavelengths than the band transmits. This optical filter has a characteristic property that the light in the above-described wavelength band is reflected even if it is of any polarized light component.

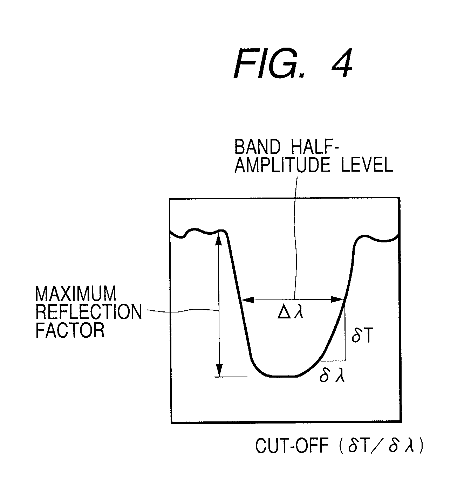

In this case, when the half-amplitude level of the wavelength band of reflecting light is assumed to be Δλ in FIGS. 3 and 4, Δλ/λ₀ is expressed by the following Numerical Formula 1.

### (Numerical Formula 1)

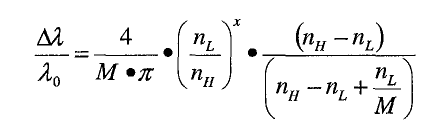

In the above-described Numerical Formula 1, x designates a number of laminated layers of the low refractive index film 2 and the high refractive index film 3 respectively, and M designates an arbitrary integer. From the Numerical Formula 1, it can be seen that the smaller the difference in refractive index (n_{H} - n_{L}), and the more the number of laminated layers of the film, the narrower can be the wavelength band (half-amplitude level (Δλ) of reflecting light.

Next, with the substrate refractive index of the transparent substrate 1 as ns = 1.50 and the low refractive index as n_{L} = 1.6, the optical filter shown in FIGS. 1A and 1B has been designed. The difference in refractive index (n_{H} - n_{L}), the number of laminated layers of the film (x) , the half-amplitude level (Δλ) of the wavelength band of reflecting light, the maximum reflective index and cut-off characteristic at that time are shown on the following Table 1. In this respect, the half-amplitude level (**Δλ**), the maximum refractive index and cut-off characteristic are shown in FIG. 4. The above-described cut-off characteristic is (δT/δλ) in FIG. 4, and the larger this numerical value, the steep reflection band including the center wavelength λ₀ can be obtained.

**(Table 1)**

| n_{H} - n_{L} | Total number of layers (x) | Band half-amplitude level (Δλ) (nm) | Maximum reflection factor (dB) | Cut-off characteristic (dB/nm) |
|---|---|---|---|---|
| 0.001 | 16,000 | 0.6 | 30 | |
| | 8,000 | 0.8 | 10 | |
| | 4,000 | | 2.5 | |
| 0.01 | 1,800 | 6 | 40 | |
| | 900 | 6 | 20 | |
| | 400 | 6 | 3 | |
| 0.1 | 400 | 52 | 80 | |
| | 200 | 56 | 40 | |
| | 100 | 68 | 15 | |
| 0.2 | 200 | 106 | 90 | 27 |
| | 100 | 112 | 40 | 3 |
| | 50 | 134 | 10 | |
| 0.4 | 200 | 218 | 140 | 56 |
| | 100 | 220 | 90 | 7 |
| 0.6 | 140 | 308 | 140 | 33 |
| | 100 | 312 | 130 | 14 |

If the refractive index difference (n_{H} - n_{L}) is made smaller and the number of laminated layers x of optical films is increased as shown on the Table 1, the half-amplitude level of the reflective band can be narrowed, and if the number of laminated layers X is increased, the maximum reflection factor can be raised, and the cut-off characteristic can be improved.

For example, when the refractive index difference (n_{H} - n_{L}) is set to 0.001, the half-amplitude level (Δλ) of the wavelength band of reflecting light can be made narrower than 1 nm, and when the refractive index difference (n_{H} - n_{L}) is set to 0.01, the half-amplitude level (Δλ) of the wavelength band of reflecting light can be expressed in units of nm. Further, when the refractive index difference (n_{H} - n_{L}) is set to 0.1, it is possible to set the half-amplitude level (Δλ) to a value on the order of several tens nm. When the refractive index difference (n_{H}- n_{L}) exceeds 0.2, however, the half-amplitude level (Δλ) widens and the cut-off characteristic (δT/δλ) is also gradually deteriorated. Therefore, this will be able to be given an excellent characteristic as a band reflection type optical filter having the structure of FIGS. 1A and 1B from Table 1 if the refractive index difference (n_{H} - n_{L}) is made under 0.2, preferably 0.1 or less.

However, when an attempt is made to manufacture a narrow-band reflection type optical filter having the half-amplitude level of the reflective band being under 1 nm from the Table 1, it is necessary to make the refractive index difference (n_{H} - n_{L}) as exceedingly minute as 0.001, and the number of laminated layers (X) of the film also becomes as exceedingly enormous an amount as 8,000 to 16,000.

From the foregoing, when there is formed a narrow-band reflection type optical filter having the structure shown in FIGS. 1A and 1B, the refractive index difference (n_{H} - n_{L}) is made to be 0.01 and over to 0.2 excl., preferably 0.01 and over to 0.1 incl., and the number of laminated layers of the film is preferably made to be 100 and over to 1800 incl. It is preferably under 1000 in terms of ease of manufacture.

Next, Table 2 shows relationship between the high refractive index n_{H} and the band half-amplitude level (Δλ) when design has been made with the substrate refractive index ns as 1.507, the refractive index difference (n_{H} - n_{L}) as 0.001 and the number of laminated layers (X) of the film as 16,000. As can be seen from Table 2, when an attempt is made to set the refractive index difference (n_{H} - n_{L}) to 0.001 and to further reduce the half-amplitude level, it is necessary to set the high refractive index n_{H} to a high value, and therefore, it is necessary to set both n_{H} and n_{L} such that both are high values and the difference between them is minute.

**(Table 2)**

| Total number of layers (x) | n_{S} | n_{H}-n_{L} | n_{H} | Band half-amplitude level (Δλ) (nm) |
|---|---|---|---|---|
| 16,000 | 1,507 | 0.001 | 1.6 | 0.8 |
| | | | 1.9 | 0.7 |
| | | | 2.2 | 0.6 |
| | | | 2.5 | 0.4 |

Next, in the optical filter shown in FIGS. 1A and 1B, there is produced ripple whose transmission factor fluctuates in convergent series in light having any other wavelengths than the reflective band as shown in FIG. 3. This ripple can be eliminated by having the laminated structure shown in FIG. 2.

The optical filter shown in FIG. 2 comprises one or more layers of low refractive index films 2 having the optical film thickness of n_{L}•d_{L} = 1/(2•m•λ₀), and one or more layers of high refractive index films 3 having the optical film thickness of n_{H}•d_{H} = 1/(2•m•λ₀), which are alternately stacked in the central portion (Pmax and Pmin portions) of the film in the direction of film lamination. It is constructed such that the refractive index gradually varies in stages before and after in the direction of lamination.

More specifically, the low refractive index film 2 all has the same physical film thickness of d_{L}; a predetermined number of the low refractive index films 2 at the central portion have the optical film thickness of n_{L}•d_{L} = 1/(2•m•λ₀); and before and after it, the refractive index becomes gradually higher as indicated by n_{L}', n_{L}", .... from the central portion toward the end portion of the layered product. Also, the high refractive index film 3 all has the physical film thickness of d_{H}; a predetermined number of the high refractive index films 3 at the central portion have the optical film thickness of n_{H}•d_{H} = 1/(2•m•λ₀); and before and after it, the refractive index becomes gradually lower as indicated by n_{H}', n_{H}", .... from the central portion of the laminated layers forward and backward in the direction of lamination.

As described above, in FIG. 2, the high refractive index film 3 is constant in physical film thickness d_{H}, the refractive index n_{H} becomes gradually larger toward the direction of lamination of the film, and becomes gradually smaller after a peak Pmax is passed. Also, the low refractive index film 2 is constant in physical film thickness d_{L} , the refractive index n_{L} becomes gradually smaller toward the direction of lamination of the film in such a manner that it and the above-described change become vertically symmetrical, and becomes gradually larger after a peak Pmin is passed. Thus, the films of the peaks Pmax and Pmin are set in the same manner as in FIG. 1B to be n_{L}•d_{L} = 1/(2•m•λ₀) and n_{H}•d_{H} = 1/(2•m•λ₀).

Before and after the layered product, the refractive index is caused to be gradually changed as described above to determine a rate of change in this refractive index by means of Fourier transformation so as to be able to form in a shape to eliminate the ripple shown in FIG. 3, whereby the ripple can be substantially eliminated.

With the provision of the laminated structure shown in FIG. 1 as described above, it is possible to form an optical filter having a narrow reflective band, and the laminated structure shown in FIG. 2 is provided, whereby it is possible to eliminate the ripple. However, when an attempt is made to narrow the half-amplitude level (Δλ) of the reflective band in FIG. 1 as described above, it is necessary to set the difference (n_{H} - n_{L}) between the high refractive index n_{H} and the low refractive index n_{L} to under 0.2, or preferably 0.1 or less as shown on Table 1.

Further, in the structure shown in FIG. 2, the refractive index difference (n_{H} - n_{L}) must be made minute and in the difference, a minute difference changing in progression which has been obtained by performing the Fourier transformation between the refractive indices n_{H} and n_{L} must be further gradually provided. In the structure shown in FIG. 2, if the refractive index difference (n_{H} - n_{L}) is 0.1 and over to about 0.2 excl., it will be possible to obtain a structure in which, within the range, the refractive indices n_{H} and n_{L} are caused to have gradually a difference therebetween. If, however, the refractive index difference (n_{H} - n_{L}) is under 0.1, it will become difficult in terms of a problem concerning selectivity of optical materials and adjustment of the refractive index difference between films to cause the refractive indices n_{H} and n_{L} to have a difference changing in progression therebetween, and it becomes somewhat difficult to manufacture.

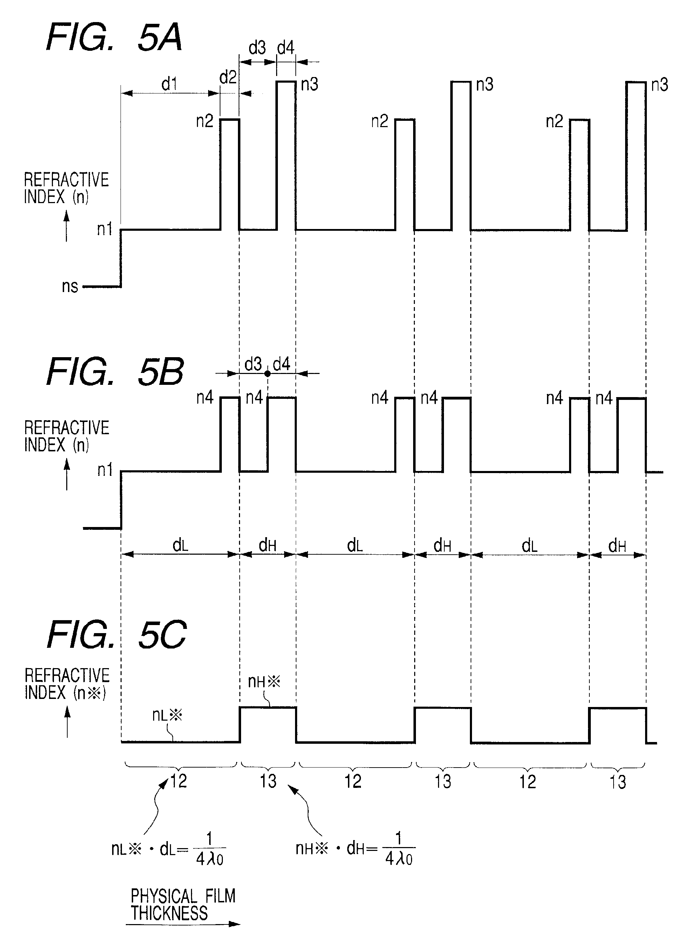

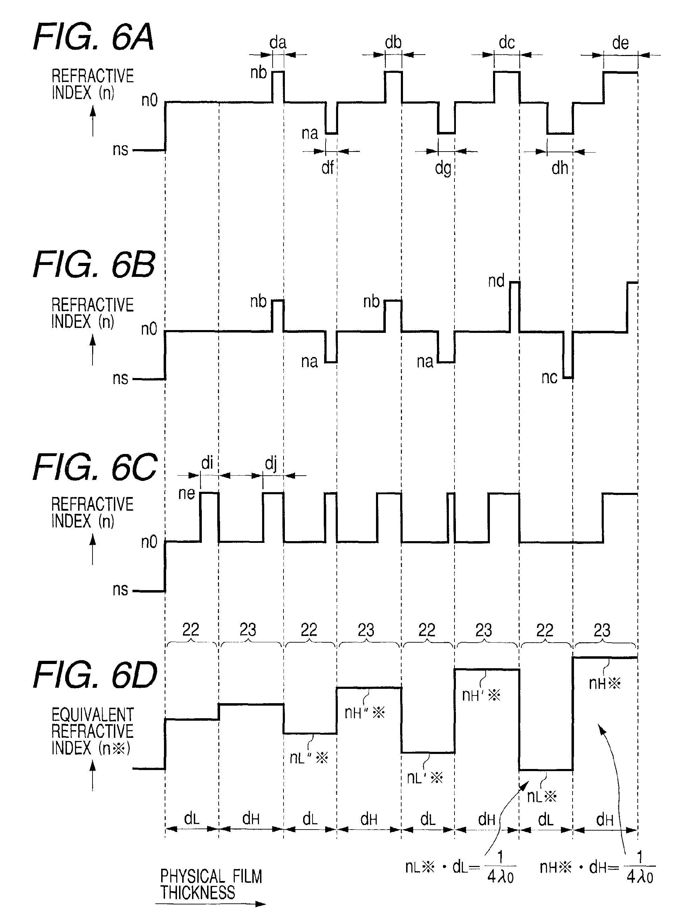

Thus, when the laminated structure of the optical film shown in FIG. 5 is adopted, it is possible to constitute an optical filter having the same characteristic as shown in FIG. 1, and yet a small half-amplitude level (Δλ) of the reflective band even if optical materials having a large refractive index difference are combined. Also, when the laminated structure of the optical film shown in FIG. 6 is adopted, it is possible to form an optical filter which has eliminated the ripple in the same manner as shown in FIG. 2 even if optical materials having a large refractive index difference are combined.

FIGS. 5A and 5B show optical filters having multilayer film structure for each embodiment, and the axis of abscissas represents the physical film thickness while the axis of ordinates represents the refractive index of each optical film. Also, FIG. 5C shows relationship between the physical film thickness and the equivalent refractive index of the optical filters having the structure shown in FIGS. 5A and 5B.

In the optical filter shown in FIG. 5A, a range of the physical thickness d_{L} is a low refractive index region 12 and a range of the physical thickness d_{H} is a high refractive index region 13. Within the low refractive index region 12, an optical film with the refractive index n1 is formed at a physical film thickness d1, next to which, an optical film with the refractive index n2 is formed at a physical film thickness d2. Also, within the high refractive index region 13, the film with the refractive index n1 is formed at the physical film thickness d3, next to which, the film with the refractive index n3 is formed at a physical film thickness d4. All the low refractive index regions 12 have the same laminated structure, and all the high refractive index regions 13 have also the same laminated structure. Thus, the low refractive index regions 12 and the high refractive index regions 13 are formed so as to be alternately repeated in the direction of thickness.

When the low refractive index region 12 and the high refractive index region 13 are made into a combination of a plurality of optical films having different physical film thickness dx and different refractive index nx in this manner, the optical film thickness of the low refractive index region 12 becomes equivalently n_{L}*•d_{L} = Σ(nx•dx), and the optical film thickness of the high refractive index region 13 becomes equivalently n_{H}*•d_{L} = Σ(nx•dx). Thus, the n_{L}* becomes an equivalent refractive index of the low refractive index region 12, and n_{H}* becomes an equivalent refractive index of the high refractive index region 13.

In the laminated structure of the optical film of FIG. 5A, the optical film thickness of the low refractive index region 12 becomes equivalently n_{L}*•d_{L} = (n1•d1 + n2• d2) , and the optical film thickness of the high refractive index region 13 becomes equivalently n_{H}*•d_{H} = (n1•d3 + n3' d4). If the equivalent optical film thickness n_{L}*•d_{L} of the low refractive index region 12 is assumed to be (n1· d1 + n2•d2) = 1/(2•m•λ₀) and the equivalent optical film thickness n_{H}*•d_{H} of the high refractive index region 13 is assumed to be (n1•d3 + n3•d4)= 1/(2•m•λ₀) in the same manner as in FIG. 1B (where m = 1 or m = 2 and the like) , an optical filter having the same characteristic as shown in FIG. 1B can be constituted.

In FIG. 5A, n3 > n2, and the physical film thickness d2 of the optical film having the refractive index n2 and the physical film thickness d4 of the optical film having the refractive index n3 may be the same or may be different from each other.

Next, the layered product of optical film shown in FIG. 5B has, in the low refractive index region 12, an optical film having the refractive index n4 and the physical film thickness d2 formed next to film having refractive index n1 and physical film thickness d1. Also, in the high refractive index region 13, next to the film having refractive index n1 and physical film thickness d3, an optical film having refractive index n4 is formed such that the physical film thickness becomes d4. However, d4> d2.

In FIG. 5B, the optical film thickness of the low refractive index region 12 becomes equivalently n_{L}*•d_{L} = (n1•d1 + n4•d2) = 1/(2•m•λ₀), and the optical film thickness of the high refractive index region 13 becomes equivalently n_{H}*•d_{H} = (n1•d3 + n4•d4) = 1/(2•m•λ₀).

In this respect, in FIGS. 5A to 5C, the low refractive index region 12 has all the same physical film thickness of d_{L} and the high refractive index region 13 has all the same physical film thickness of d_{H}, and d_{L} ≠ d_{H}.

In the optical filters having the laminated structure shown in FIGS. 5A and 5B, even if a difference between refractive index n1 and n2 of the optical film, a difference between refractive index n1 and n3 and further a difference between refractive index n1 and n4 are large, a difference between equivalent optical film thickness n_{L}*•d_{L} of the low refractive index region 12 and equivalent optical film thickness n_{H}*•d_{H} of the high refractive index region 13 can be actually made smaller. Therefore, the above-described refractive indices n1, n2, n3 or n1 and n4 are optimally selected and the film thickness of each optical film is set, whereby an optical film having the same characteristic as a film obtained by setting the refractive index difference (n_{H} - n_{L}) to 0.01 or 0.001 can be obtained as shown on Table 1. Accordingly, it becomes easier to constitute an optical filter having small half-amplitude level (Δλ) of the reflective band.

Also, the following Table 3 shows refractive indices of various optical materials. If each film is formed by using these materials, or a combination of these materials or changing the compounding ratio of these materials, it will be possible to easily combine refractive indices n1 and n2 or n3 shown in FIGS. 5A and 5B, or refractive indices n1 and n4.

**(Table 3)**

| Material | Refractive Index |
|---|---|
| ZrO₂ | 2.00 |
| Nb₂O₃ | 2.10 |
| HfO₂ | 2.15 |
| CeO₂ | 2.20 |
| TiO₂ | 2.35 |
| Ta₂O₃ | 2.40 |

FIGS. 6A to 6C show the laminated structure of the film of the optical filter, and the axis of abscissas represents physical film thickness while the axis of ordinates represents the refractive index of each film. Also, FIG. 6D shows equivalent refractive index n_{L}* and n_{H}* of the low refractive index region 22 and the high refractive index region 23 of the optical filter of FIGS. 6A to 6C.

The optical filter shown in FIG. 6 comprises low refractive index regions 22, each obtained by combining optical films having different refractive index nx and different physical film thickness dx, and high refractive index regions 23, each likewise obtained by combining optical films having different refractive index nx and different physical film thickness dx alternately stacked. All the low refractive index regions 22 have a physical thickness d_{L} while all the high refractive index regions 23 have a physical thickness d_{H}, and d_{L} ≠ d_{H}.

Thus, as in the case of FIG. 5, the optical film thickness of the low refractive index region 22 is equivalently determined by n_{L}*•d_{L} = Σ(nx•dx), and the optical film thickness of the high refractive index region 23 is also equivalently determined by n_{H}*•d_{H} = Σ(nx•dx).

In this optical filter, the equivalent refractive index n_{L}* of the low refractive index region 22 becomes a minimum at the central region (right end portion of the figure) of the film as shown in FIG. 6D, and the equivalent optical film thickness of the low refractive index region 22 of that portion is n_{L}*•d_{L} = 1/(2•m•λ₀). Also, at the central region of the film, the equivalent refractive index n_{H}* of the high refractive index region 23 becomes a maximum, and the equivalent optical film thickness of the high refractive index region 23 of that portion is n_{H}*•d_{H} = 1/(2•m•λ₀). Thus, in each low refractive index region 22, the equivalent refractive index n_{L}* gradually becomes smaller in stages toward the central region of the film, and in each high refractive index region 23, the equivalent refractive index n_{H}* gradually becomes larger in stages toward the central region of the film.

Changes in the equivalent refractive indices n_{L}* and n_{H}* are adapted to have a functional change determined by performing the Fourier transformation so as to be able to eliminate the ripple shown in FIG. 3.

In the optical filter shown in FIG. 6A, the low refractive index region 22 at the left end in the figure is formed by an optical film having physical film thickness d_{L} at intermediate refractive index n0, and the optical film thickness of the low refractive index region 22 is equivalently (n0•d_{L}). In the next high refractive index region 23, the optical film at the intermediate refractive index n0 is formed at physical film thickness (d_{H} - da). Next, there is formed an optical film having high refractive index nb and physical film thickness da, and the optical film thickness of the high refractive index region 23 is equivalently {n0 (d_{H} - da) + nb•da}.

In the next low refractive index region 22, the optical film at the intermediate refractive index n0 is formed at the physical film thickness (d_{L} - df) , next there is formed an optical film having a physical film thickness df at the low refractive index na, and the optical film thickness of the high refractive index region 23 is equivalently {n0(d_{L}-da) + na•df}.

Thus, the film of the high refractive index nb becomes gradually thicker in the order of da, db, dc, de, ... in film thickness toward the direction of lamination of the film for each of the high refractive index regions 23. The film is formed such that the physical film thickness becomes peak in the plurality of high refractive index regions 23 at the central portion in the direction of lamination, and thereafter becomes gradually thinner. Also, the optical film of the low refractive index na also becomes gradually thicker in the order of df, dg, dh,... in physical film thickness for each of the low refractive index regions 22 toward the direction of lamination of the film in such a manner that the optical film of the low refractive index na and the optical film of the refractive index nb become vertically symmetrical. The film is formed such that the physical film thickness becomes peak in the plurality of low refractive index regions 22 at the central portion in the direction of lamination, and thereafter becomes gradually thinner.

As a result, as shown in FIG. 6D, in the low refractive index regions 22, the equivalent refractive index (equivalent optical film thickness/physical film thickness d_{L}) becomes gradually smaller toward the central portion of the layered product as indicated by..., n_{L}"*, n_{L}'*,..., and in the plurality of low refractive index regions 22 at the central portion of the film, the equivalent optical film thickness becomes n_{L}*•d_{L} = 1/(2• m•λ₀).

Similarly, in the high refractive index regions 23, the equivalent refractive index becomes gradually larger toward the central portion of the layered product as indicated by..., n_{H}"*, n_{H}'*,..., and in the plurality of high refractive index regions 23 at the central portion of the film, the equivalent optical film thickness becomes n_{H}*•d_{L} = 1/(2•m•λ₀).

A change in the equivalent high refractive index n_{H}* and a change in the equivalent low refractive index n_{L}* are vertically symmetrical, and becomes a change conforming to a function Fourier-transformed.

FIGS. 6B and 6C both show an example of lamination of an optical film for changing in stages the equivalent refractive index n_{H}* and the equivalent refractive index n_{L}* with the physical thickness d_{L} of the low refractive index region 22 and the physical thickness d_{H} of the high refractive index region 23 as constant.

In the optical filter shown in FIG. 6B, the physical film thickness of the film of the high refractive index nb and the film of the low refractive index na changes in stages over a predetermined number of low refractive index regions 22 and high refractive index regions 23. After that, in the predetermined number of low refractive index regions 22 and high refractive index regions 23, an optical film (nd > nb) of further high refractive index nd and an optical film (nc > na) of further low refractive index nc are formed, and the physical film thickness of the film of this refractive index nd and the film of the refractive index nc changes in stages over the plurality of the low refractive index regions 22 and high refractive index regions 23. As a result, as shown in FIG. 6D, the equivalent refractive index n_{H}* and the equivalent refractive index n_{L}* are arranged to be able to obtain an equivalent characteristic that functionally changes toward the direction of lamination of the film.

Further, in the optical filter shown in FIG. 6C, two types: an optical film of refractive index n0 and an optical film of high refractive index ne are used, and within the range of the low refractive index region 22, the physical film thickness of the film of the high refractive index ne is made small, while within the range of the high refractive index region 23, the physical film thickness of the film of the high refractive index ne is made large. Further, in the low refractive index region 22, the physical film thickness of the film of the high refractive index ne is gradually made smaller in stages toward the direction of lamination of the film, and thereafter it is made gradually larger. In the high refractive index region 23, the physical film thickness of the film of the high refractive index ne is gradually made larger in stages toward the direction of lamination of the film, and thereafter it is made gradually smaller.

Even in the case of laminated structure of such a film as shown in FIG. 6C, the equivalent optical film thickness of the low refractive index region 22 becomes n_{L}*•d_{L} = 1/(2•m•λ₀) in the central portion of a layered product as shown in FIG. 6D; similarly, the equivalent optical film thickness of the high refractive index region 23 becomes n_{H}*•d_{H} = 1/(2•m•λ₀) in the central portion of the layered product; and before and after it, there can be formed an optical filter whose equivalent refractive index gradually changes toward the central portion of the layered product.

In such an optical filter as shown in FIG. 6, even if a difference between the refractive index n0 and each refractive index na, nb, nc, nd, and ne is large, it is possible to make a difference between the equivalent refractive index n_{L}* of the low refractive index region 22 and the equivalent refractive index n_{H}* of the high refractive index region 23 smaller, and to change the equivalent refractive index difference n_{H}* and n_{L}* in stages. The optical materials shown on Table 3 are selected for use, or the optical materials shown on Table 3 are combined, and the ratio of the combination is selected to form the film by sputtering, CVD or the like, whereby the refractive index n0 and each refractive index na, nb, nc, nd, and ne can be freely set.

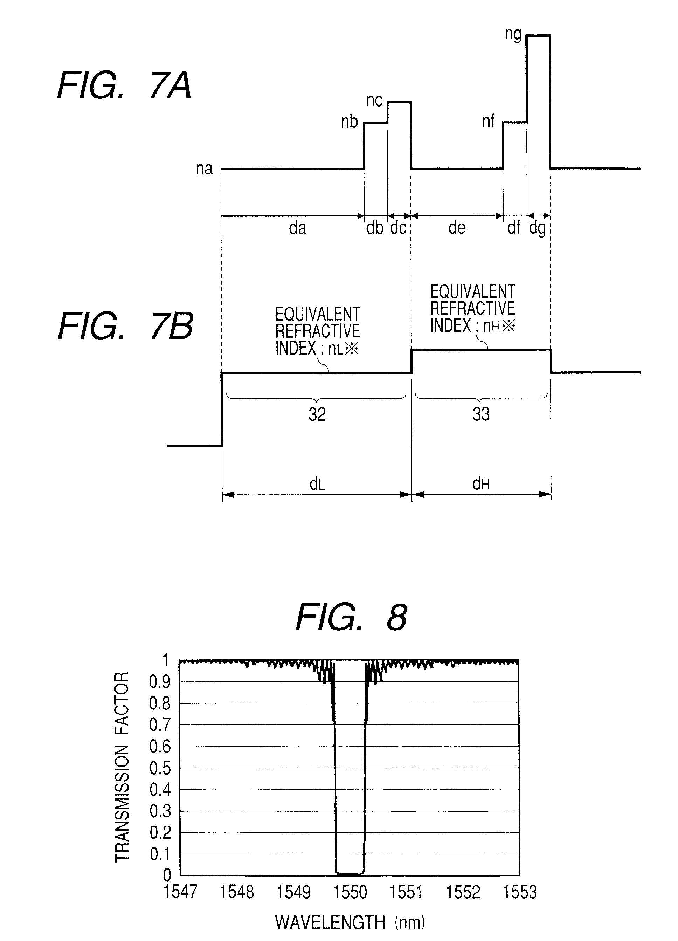

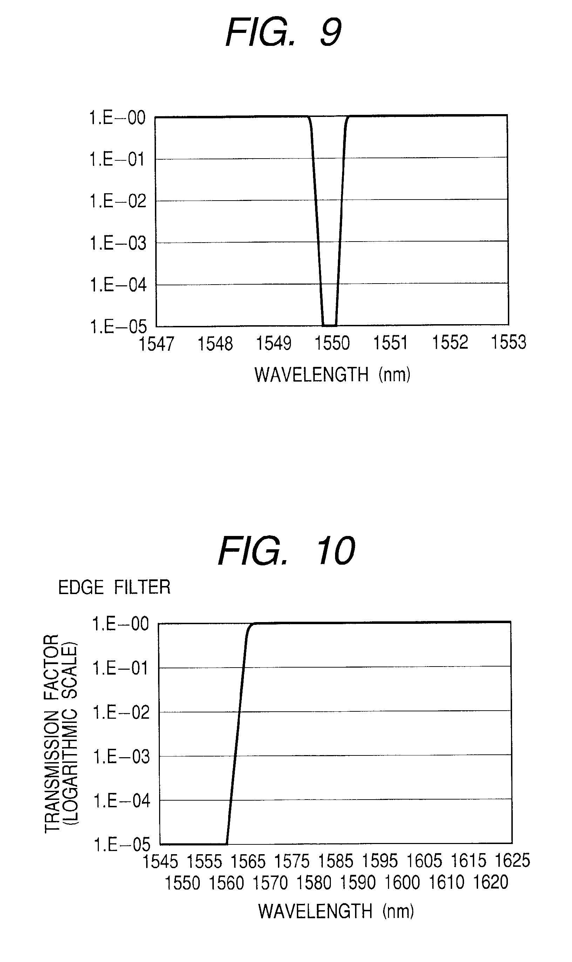

From the foregoing, in the optical filter shown in FIG. 5, it is possible to easily form a reflection type filter having a narrow band being 1 nm or less in such a half-amplitude level as shown in FIG. 8, and further in an optical filter whose equivalent refractive index changes in progression as shown in FIG. 6, it is possible to easily form a narrow-band reflection type optical filter with such ripple as shown in FIG. 9 eliminated.

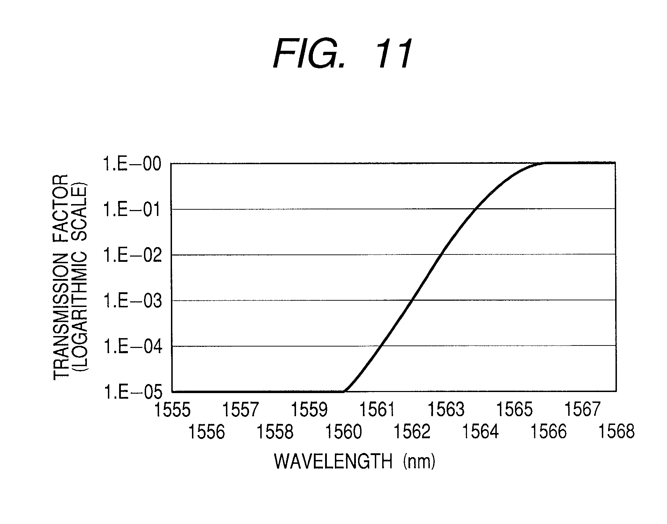

Further, as shown in FIG. 6, the equivalent high refractive index n_{H}* is made larger in stages and is changed so as to become smaller; the equivalent low refractive index n_{L}* is made smaller in stages and thereafter, is changed so as to become larger in stages; and further peaks of the above-described changes may be set in plural places in the direction of lamination of the film. Thus, an optical filter whose wavelength band of light to be reflected becomes a broad band can be formed, and as a result, it is also possible to form a band-pass filter having such characteristics as shown in FIG. 10 or FIG. 11.

Next, FIG. 7 shows a further preferred embodiment according to the present invention.

FIG. 7A shows laminated structure of the film of the optical filter, and the axis of abscissas represents physical film thickness of the laminated film while the axis of ordinates represents the refractive index of each film. Also, FIG. 7B shows relationship between changes in the equivalent refractive index n_{L}* and the equivalent refractive index n_{H}* of the optical filter of FIG. 7A and the physical film thickness.

In this embodiment, in a low refractive index region 32, next to a film having a refractive index of na and physical film thickness of da, a film having a refractive index of nb and a physical film thickness of db and a film having a refractive index of nc and a physical film thickness of dc are stacked (nc > nb > na). Also, in a high refractive index region 33, a film of a refractive index of na is formed at a physical film thickness de, next to which a film of a refractive index nf is formed at physical film thickness df. Further, a film of a refractive index ng is formed at physical film thickness dg (ng > nf > na).

As a result, in the low refractive index region 32, the optical film thickness becomes equivalently n_{L} • d_{L}* = (na•da + nb•db + nc•dc), and in the high refractive index region 33, the optical film thickness becomes equivalently n_{H}•d_{H}* =(na•de + nf•df + ng•dg). If the equivalent optical film thickness is set to 1/(2•m•λ₀) (for example, m = 1, m = 2) , the same optical filter as in FIG. 5 will be able to be formed, and if the equivalent high refractive index n_{H}* and the equivalent low refractive index n_{L}* are changed toward the direction of lamination of the film in accordance with the Fourier function, the same optical filter as in FIG. 6 will be formed.

In this respect, next to the film thickness having the refractive index nb, nc, further another film whose refractive index lowers in stages may be formed.

When the film having the high refractive index is changed in stages as shown in FIG. 7, it is possible to prevent reflection of wavelengths of higher order equal to an integer multiple of the center wavelength λ₀ from occurring, and an optical filter having further excellent characteristics can be obtained.

In this respect, in the above-described description, the description has been made with m as an integer of 1 or more, and with m = 1 or m = 2 as an example, but even if the above-described m is any other constant than an integer, the above-described effect can be exhibited.

As described above, according to the present invention, with the thin-film multilayer structure, an optical filter which reflects light in the band including the center wavelength λ₀ can be constituted at low cost. Also, since it is also possible to easily change the refractive index in progression, any ripple change in the transmission factor can be eliminated. Further, it results in a high degree of freedom in terms of design, and it becomes possible to constitute an optical filter having various characteristics.

## Claims

1. An optical filter comprising low refractive index films formed of optical materials and high refractive index films likewise formed of the optical materials alternately stacked, wherein
each of the low refractive index films has a refractive index of n_{L} and a physical film thickness of d_{L} and each of the high refractive index films has a refractive index of n_{H} (n_{L} < n_{H}) and a physical film thickness of d_{H},
wherein an optical film thickness of the low refractive index film is n_{L}•d_{L} = 1/(2•m•λ₀), and an optical film thickness of the high refractive index film is n_{H}• d_{H} = 1/(2•m•λ₀) (where m is an arbitrary constant), and
wherein, of incident light, light in a band of a predetermined range including a wavelength λ₀ does not transmit but is reflected.

2. An optical filter comprising low refractive index films formed of optical materials and high refractive index films likewise formed of the optical materials alternately stacked, wherein
a physical film thickness d_{L} of each of the low refractive index films is constant, wherein a physical film thickness d_{H} of each of the high refractive index films is constant, and wherein the low refractive index film and the high refractive index film are formed such that a refractive index is gradually changed toward a direction of the film lamination,
wherein one or more layers of low refractive index film having the lowest refractive index have a refractive index of n_{L} and an optical film thickness of n_{L}•d_{L} = 1/(2• m•λ₀), and wherein one or more layers of high refractive index film having the highest refractive index have a refractive index of n_{H} (n_{L} < n_{H}) and an optical film thickness of n_{H}•d_{H} = 1/(2•m•λ₀) (where m is an arbitrary constant) , and
wherein, of incident light, light in a band of a predetermined range including wavelength λ₀ does not transmit but is reflected.

3. An optical filter comprising a low refractive index region having a physical thickness of d_{L} and a high refractive index region having a physical thickness of d_{H} alternately stacked, wherein
the low refractive index region and the high refractive index region are formed by a layered product (nx and dx are both variables) of films having a refractive index of nx and a physical film thickness of dx, and wherein an optical film thickness of the low refractive index region is equivalently n_{L}*•d_{L} = Σ(nx•dx) while an optical film thickness of the high refractive index region is equivalently n_{H}*•d_{H} = Σ(nx•dx) (n_{L}* and n_{H}* are equivalent refractive indices and n_{L}* < n_{H}*),
wherein the optical film thickness of the low refractive index region is n_{L*}•d_{L} = 1/(2•m•λ₀), and wherein the optical film thickness of the high refractive index region is n_{H*}•d_{H} =1/(2•m•λ₀) (where "m" is an arbitrary constant) ,
wherein, of incident light, light in a band of a predetermined range including wavelength λ₀ does not transmit but is reflected.

4. An optical filter comprising a low refractive index region having a physical thickness of d_{L} and a high refractive index region having a physical thickness of d_{H} alternately stacked, wherein
the low refractive index region and the high refractive index region are formed by a layered product (nx and dx are both variables) of films having a refractive index of nx and a physical film thickness of dx, and wherein an optical film thickness of the low refractive index region is equivalently n_{L}*•d_{L} = Σ(nx•dx) while an optical film thickness of the high refractive index region is equivalently n_{H*}•d_{H} = Σ(nx•dx) (n_{L}* and n_{H}* are equivalent refractive indices and n_{L}* < n_{H}*),
wherein the physical thickness d_{L} of each of the low refractive index regions is constant, wherein the physical thickness d_{H} of each of the high refractive index regions is constant, and wherein the low refractive index region and the high refractive index region are formed such that the equivalent refractive index n_{L}* or n_{H}* gradually varies toward a direction of the film lamination,
wherein the low refractive index region at one or more places having the lowest equivalent refractive index is equivalently n_{L}•*d_{L} = 1/(2•m•λ₀) in optical film thickness, and wherein one or more high refractive index regions having the highest equivalent refractive index are equivalently n_{H*}•d_{H} = 1/(2•m•λ₀) (where m is an arbitrary constant) in optical film thickness, and
wherein, of incident light, light in a band of a predetermined range including wavelength λ₀ does not transmit but is reflected.

5. The optical filter according to Claim 4,
wherein the low refractive index region and the high refractive index region have optical films having the same refractive index, and wherein the physical film thickness of the optical film varies for each region.

6. The optical filter according to Claim 4, wherein the optical filter has, in the low refractive index region and the high refractive index region, an optical film whose physical film thickness is constant in each region and whose refractive index gradually varies for each region.

7. The optical filter according to Claim 4, wherein inside the low refractive index region and inside the high refractive index region, the refractive index varies at least in two stages.

8. The optical filter according to Claim 7, wherein the refractive index of each optical film differs by changing combination of materials.

9. The optical filter according to Claim 7, wherein the refractive index of each optical film differs by changing the compounding ratio of materials.
